(19)

Europäisches
Patentamt
European
Patent Office
Office européen
des brevets

(11) **EP 2 621 180 A2**

(12) **EUROPEAN PATENT APPLICATION**

(43) Date of publication:
**31.07.2013 Bulletin 2013/31**

(51) Int Cl.:
**H04N 21/239** (2011.01) **H04N 21/266** (2011.01)
**H04N 21/422** (2011.01) **H04N 21/4728** (2011.01)

(21) Application number: **12175505.2**

(22) Date of filing: **09.07.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **06.01.2012 JP 2012001629**

(71) Applicant: **Kabushiki Kaisha Toshiba Tokyo 105-8001 (JP)**

(72) Inventors:
• **Kataoka, Hideo**
**Tokyo (JP)**
• **Toma, Hideyuki**
**Tokyo (JP)**

(74) Representative: **Henkel, Breuer & Partner Patentanwälte**
**Maximiliansplatz 21**
**80333 München (DE)**

(54) **Electronic device and audio output method**

(57)      According to one embodiment, an electronic device control method characterized by including, detecting a position range specification of a particular object based on a touch operation from a moving image displayed on a touchscreen, outputting information on the detected particular object to a server via a network, and receiving a search result including tag information searched for in the server, and determining and reproducing, in accordance with the received tag information, a segment of the moving image in which the particular object is displayed.

F I G. 9

EP 2 621 180 A2

**Description**

Embodiments described herein relate generally to information reproducing apparatus (electronic device) and a control method of the same.

An information reproducing apparatus such as a television receiver or a disk recorder/reproducer has the function of receiving broadcast program signals and recording the signals in a recording medium. An apparatus comprising more than one tuner has the function of simultaneously recording broadcast program signals of many channels in a recording medium. This apparatus also has the function of recording, in a recording medium, broadcast program signals received in accordance with timer recording data.

Nowadays, in response to varied broadcast programs (content) and varied broadcast program providing sources, there are demands to extract and view, for example, a particular person, animal, or scene.

In order to precisely manage the preference of a user, the user needs to actively do the operation of emphasizing his/her preference. To emphasize the preference, it is necessary to form means for registering, for example, the names of favorite performers and programs as key data and extracting programs including such key data as recommended programs.

There have been suggested a number of methods of extracting a particular person, animal, or scene from a given broadcast program (content) in accordance with the user's preference. Such generally known methods require the user to input, for example, a keyword or to specify a screen and find a scene (screen) that resembles the specified screen.

Furthermore, an extraction program (application) prepared at the manufacture of a display apparatus or an input device is subject to the passage of time. For example, a new version may be already prepared at the point where the user has bought the apparatus or device.

An object of the invention is to provide an electronic apparatus for playing back content, such as moving images and still images, capable of reducing power consumption by controlling the brightness of a screen, and a method of controlling the same.

An object of the invention is to provide an electronic device and a control method of the same to extract a particular person, animal, or scene from a program in accordance with user's preference.

Another object of the invention is to provide an electronic device and a control method of the same to specify the range of extracting a particular person, animal, or scene in accordance with user's preference by cooperating with various devices such as a display device, an input device, or an external server capable of reproducing broadcast programs, or to improve user's convenience which is subject to the passage of time, for example, the preparation of an extraction program (application) at the point where the user has bought the apparatus or device.

A general architecture that implements the various features of the embodiments will now be described with reference to the drawings. The drawings and the associated descriptions are provided to illustrate the embodiments and not to limit the scope of the invention.

FIG. 1 is an exemplary diagram showing an example of a reproducing apparatus (electronic device) according to an embodiment;

FIG. 2 is an exemplary diagram showing an example of an internal function (internal block) of a controller of the electronic device in FIG. 1 according to an embodiment;

FIG. 3 is an exemplary diagram showing an example of the operation of determining a weighting value for a program to generate preference information according to an embodiment;

FIG. 4 is an exemplary diagram showing an example of a portable terminal according to an embodiment;

FIG. 5 is an exemplary diagram showing an example of how to consign the creation of preference information (recommended information) for each portable terminal to an external server according to an embodiment;

FIG. 6 is exemplary diagram showing an example of how to accept the input of a range for extracting a particular image from a display screen displayed by a portable terminal according to an embodiment;

FIG. 7 is an exemplary diagram showing an example of how to specify a search target image from the accepted range input according to an embodiment;

FIG. 8 is an exemplary diagram showing an example of how to extract feature information from the specified search target image according to an embodiment;

FIG. 9 is an exemplary diagram showing an example of a feature information extracting module according to an embodiment;

FIG. 10 is an exemplary diagram showing an example of "tags" including feature information according to an embodiment; and

FIG. 11 is an exemplary diagram showing an example of a "tag list" which comprises the "tags" including the feature information according to an embodiment.

Various embodiments will be described hereinafter with reference to the accompanying drawings.

In general, according to one embodiment, an electronic device control method characterized by comprising: detecting a position range specification of a particular object based on a touch operation from a moving image displayed on a touchscreen; outputting information on the detected particular object to a server via a network, and receiving a search result including tag information searched for in the server; and determining and reproducing, in accordance with the received tag information, a segment of the moving image in which the particular object is displayed.

Embodiments will now be described hereinafter in detail with reference to the accompanying drawings.

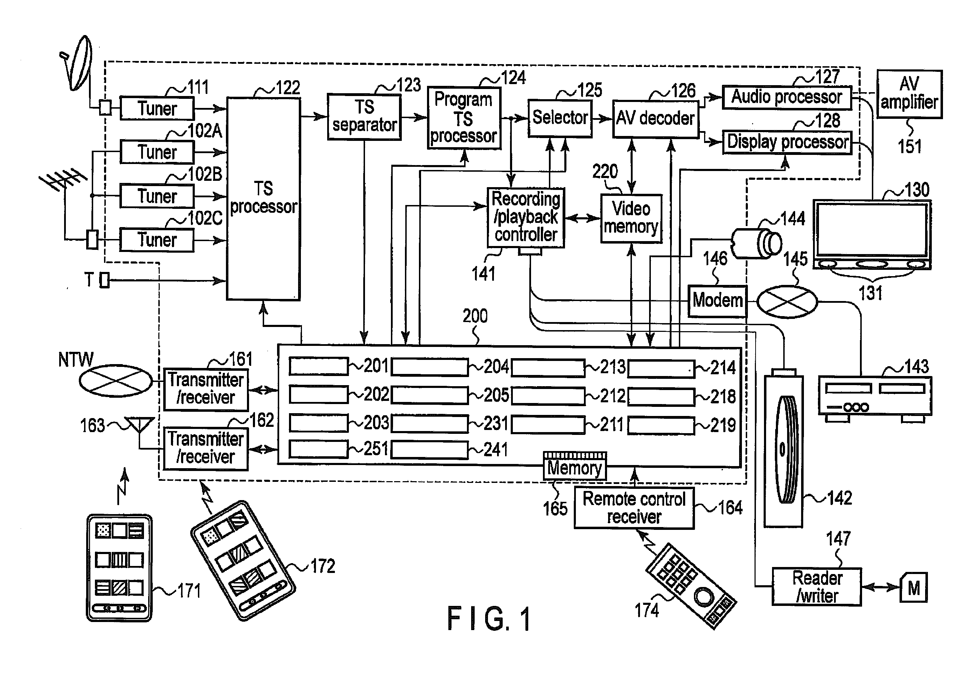

FIG. 1 shows a block diagram of an interactive digital television receiver (television receiver) according to the embodiment. Although the television receiver is described as an example of an electronic device of the embodiment, the television receiver is not limited thereto. That is, the television receiver may be any device equipped with a broadcast receiver, such as a broadcast receiver, a mobile telephone with a broadcast receiving function, a personal computer with a broadcast receiving function, and a video recorder equipped with a broadcast receiver. A broadcast is not exclusively a broadcast received on radio waves propagating in the air, and may be a broadcast that allows the reception of a program distributed from a broadcast station via a cable or a network such as an Internet Protocol (IP) network. A program is also referred to as content (stream), and includes, for example, images and sound or music. An image includes, for example, a moving image and a still image, or the display of text broadcasting or data broadcasting mainly comprising text.

A television receiver 101 comprises tuners 102A, 102B, and 102C for receiving, for example, scrambled digital terrestrial broadcast signals. A tuner 111 is, for example, a tuner for receiving DBS digital broadcasting. Although four tuners are shown, it should be understood that more tuners may be provided.

The broadcast program signals received by the tuners 102A, 102B, 102C, and 111 are input to a TS processor 122 functioning as a remultiplexer, and the TS processor 122 remultiplexes transport streams (TS) of more than one channel (CH) into one TS.

A packet of the TSs of more than one channel is time-division-multiplexed in the TS output from the TS processor 122. Therefore, for example, in the case of 4-channel input, the TS processor 122 time-division-multiplexes the array of packets at a speed five times the input and outputs a multiplexed TS. A control information packet is embedded in the packet array of the multiplexed TS. The control information packet carries control information such as multiplexed time stamp information for a channel packet of each channel, and packet array order information.

A TS remultiplexing method is not exclusively the method described here, and various methods can be used. The TS remultiplexed by the TS processor 122 is sent to a TS separator 123. The TS separator 123 separates an entitlement control massage (ECM) which is encrypted information from the broadcast program signals, and an event information table (EIT) which is a table that describes event information such as program names, performers, and start times. The TS separator 123 also separates, for example, electric program guide (EPG) information, and supplies the EPG information to a controller 200. The TS of a broadcast program is sent to a program TS processor 124.

The program TS processor 124 descrambles program streams for pay programs. A key for descrambling is generated by the controller 200. The controller 200 uses information included in the ECM and contract information in a memory 165 to generate a key. Program streams for free programs pass without being descrambled.

The program TS output from the program TS processor 124 is supplied to a selector 125 and a recording/ playback controller 141. The selector 125 selects a TS of the program to be viewed by a user, and supplies the TS to an AV decoder 126. Video data included in a video packet in the program TS is encoded by, for example, the Moving Picture Experts Group (MPEG) method or the Advanced Video Coding (AVC) method. Audio data in an audio packet is encoded by, for example, the pulse code modulation (PCM) method, the Dolby (registered trademark) method, or the MPEG method. The AV decoder 126 separates the video packet and audio packet of the program, and decodes data in each of the packets by each of the methods.

The decoded audio data is supplied to a speaker system (for example, a speaker 131 provided integrally with a display 130, or an external speaker connected via an audio/video (AV) amplifier 151) after the adjustment of sound volume and sound quality in an audio processor 127. The decoded video data is supplied to the display 130 after the adjustment of, for example, image quality, color, display scale, the number of lines, and resolution in a display processor 128. Control data for the audio processor 127 and the display processor 128 are provided from the controller 200.

The recording/playback controller 141 can supply the program TS from the program TS processor 124 to a hard disk driver 142, and/or a disk recorder/reproducer 143 or a semiconductor memory (memory card) M attached to a reader/writer 147. The hard disk driver 142 is always connected to the recording/playback controller 141, and can record, for example, one month or two months of received broadcast programs of more than one channel. The disk recorder/reproducer 143 can reproduce removable disks such as a DVD and a BD, or record signals in these disks. The disk recorder/reproducer 143 is connected to the recording/playback controller 141 via a network (domestic network) 145 and a modem 146, and can also function as a domestic server. The reader/writer 147 can supply any number of broadcast programs held in the attached semiconductor memory (memory card) M and/or one or both images and sound recorded by an external apparatus (which may be hereinafter abbreviated as content), to the removable disk included in the disk recorder/reproducer 143 or a hard disk controlled by the hard disk driver 142 through the recording/playback controller 141. The broadcast programs or content held in the hard disk or the removable disk can be held (recorded) within predetermined conditions.

A video camera 144 can image a viewer viewing the display 130 and his/her surrounding. Image signals can be managed in the controller 200 for storage, reproduction, and monitoring.

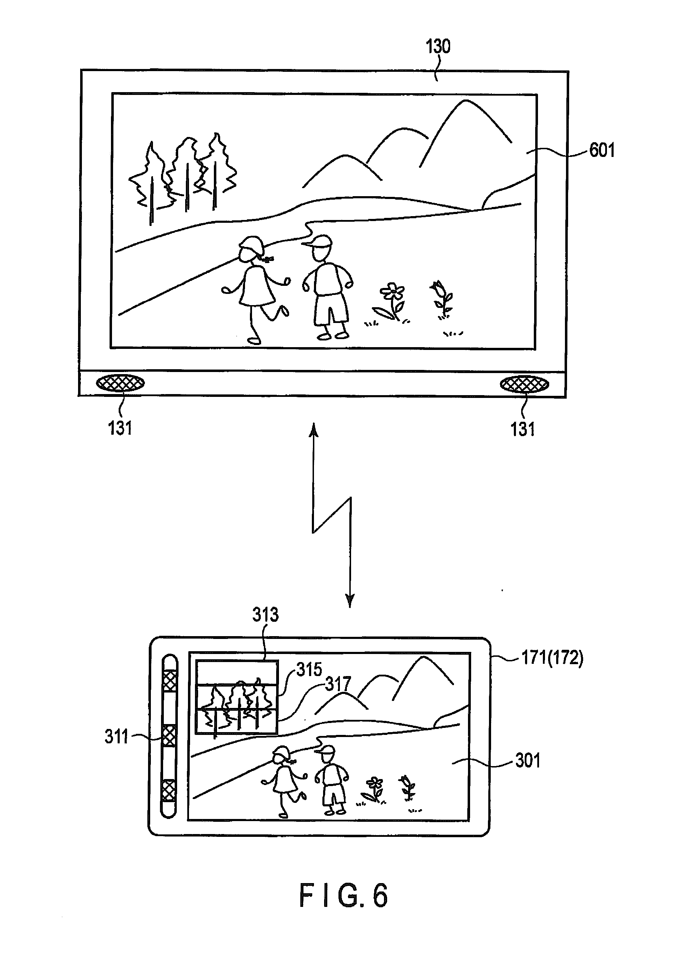

Under the control of the controller 200, the following processing is performed in a video memory (main memory) 220: the generation of a still image, for example, from the video data (fixed display of one frame of the video data), magnification changing processing for enlarged or reduced reproduction, the recognition of a specific range of an image set by input range setting described later with reference to FIG. 6 to FIG. 8, and the specification of information provided within the specific range, for example, a particular search target specified by the user.

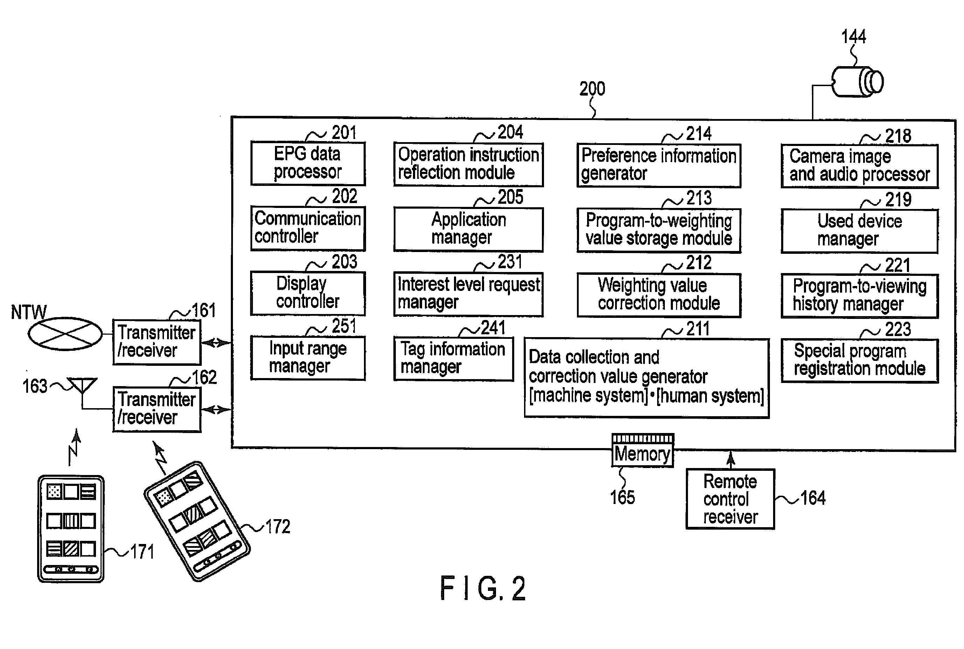

The controller 200 is described with reference to FIG. 1 and FIG. 2.

The controller 200 includes an EPG data processor 201. The EPG data processor 201 uses EPG data regarding past, present, and future programs to link and manage a program guide regarding programs broadcasted in the past already stored in the hard disk driver 142, a program guide regarding programs being presently broadcasted, and a program guide regarding future (about one month of) programs.

The EPG data processor 201 can also add information specific to the viewer or user to the EPG data. The user specific information is information that indicates that, when a broadcast program is a movie, the user has purchased or ordered a DVD or a BD containing this movie. When a broadcast program contains a concert of an orchestra, the user specific information is information regarding whether the user has purchased a ticket for a concert of this orchestra. Such information is information collected by a data collecting/correction value generator 211 described later.

The EPG data is also used to specify information provided within the specific range of an image set by the input range setting described later with reference to FIG. 6 to FIG. 8, for example, a search target specified by the user. For example, the EPG data is used to search for particular (keyword) information such as an actress A, an actor B, the Mt. Fuji (famous Japanese mountain), the Nozomi super express (the Shinkansen train in Japan) when the specified search target is a person such as an actress, an actor, or a singer, or a scene, a building, a vehicle, or an animal that can be specified by a proper noun.

The controller 200 further includes a communication controller 202. The communication controller 202 controls transmitters/receivers 161 and 162 connected to the controller 200, and input/output data in a remote control receiver 164.

The transmitter/receiver 161 is connected to a network NTW, and can be connected to, for example, a server on the Internet. The transmitter/receiver 162 is used for near field wireless communications, and can communicate with portable terminals 171 and 172 via an antenna 163. The transmitter/receiver 162 may communicate with the portable terminals 171 and 172 via a repeater (access point). In this case, the transmitter/receiver 162 may be wireless or wired when connected to the repeater. Although not shown, the television receiver may be further provided with a transmitter/ receiver connected to the domestic network to which a home server is connected. The portable terminal can be a mobile telephone, a personal computer, a tablet, or a game machine.

The remote control receiver 164 can receive an operation signal from a remote controller 174. The operation signal is analyzed by an operation command reflecting module 204. The controller 200 can reflect an operation responsive to the operation signal in a system.

In the embodiment, the operation signal can also be provided to the controller 200 from the portable terminals 171 and 172 via the transmitter/receiver 162.

The portable terminals 171 and 172 can access a server via an unshown base station or the Internet. The portable terminals 171 and 172 can download not only content provided by the server but also various applications and game software, and transfer the same to the controller 200 via the transmitter/receiver 162. When the content, application, or game software is transferred to the controller 200 from the portable terminals 171 and 172, the communication controller 202 operates. When the content (for example, moving images) is transferred, the communication controller 202 provides the received content to the recording/playback controller 141. The recording/playback controller 141 can record the received content (moving images) on the hard disk driver 142. The hard disk driver 142 manages the content by a content file. When the application or the game software (an upgraded version of the application or the game software or a new application or game software) is transferred from the portable terminals, the communication controller 202 provides the received application or game software to the recording/playback controller 141. The recording/playback controller 141 can record the received application or game software in the hard disk driver 142. The hard disk driver 142 manages the application and the game software by an application file and a game software file.

The kinds and versions of applications and game software are also managed by an application manager 205 in the controller 200. When a menu of the application and the game software is displayed, data in the application manager 205 is used.

Menu screen data and program guide screen data to be displayed are stored and/or managed in a display controller 203. When the menu is displayed or the program guide is displayed, the menu screen data or the program guide screen data is read from a data storage module (a memory or a hard disk) under the control of the display controller 203, and supplied to the display processor 128. As a result, a menu screen or a program guide screen is displayed on the display 130.

The menu screen data and the program guide screen data to be displayed can also be transmitted to the portable terminal 171 or 174. When the portable terminal 171 or 174 requests the menu screen data or the program guide screen data, the display controller 203 can transmit the menu screen data and the program guide screen data. The portable terminal 171 or 174 can display the menu screen data and the program guide screen data on a touchpanel screen. The user can give an operation command to the television receiver by touching operation buttons displayed in the touchpanel screen.

The controller 200 includes the data collecting/correction value generator 211. The data collecting/correction value generator 211 can generate a correction value for a weighting value for a program from various kinds of operation data (for example, recording, reproduction, skipping, erasing, dubbing, timer recording) generated in the apparatus and from communication data loaded from the outside. The weighting value and the correction value will be described later in detail. The correction value generated in the data collecting/correction value generator 211 corrects the weighting value of the program in a weighting value correcting module 212. The corrected weighting value is sent to and saved in a program-weighting value storage module 213.

The weighting value of the program is used to generate program preference information (a recommended program list) in a preference information generator 214. A preference level corresponding to the weighting value is set to the program. For example, program names can be then arranged in the descending order of the weighting values, and displayed on the display 130 as the recommended program list. The recommended program list is updated once a day or once every two or three days. The recommended program list can be transferred to the portable terminal and displayed on the display of the portable terminal at the request of the portable terminal. The user can perform the operation for the reproduction of the favorite program on the screen of the portable terminal.

The controller 200 has a camera image/audio processor 218. The camera image/audio processor 218 can load, for example, image data from the camera 144, and perform various kinds of processing in accordance with the application. For example, the camera image/audio processor 218 identifies the loaded face image of the viewer, and can generate a table that associates the face image with information regarding the programs viewed by the viewer corresponding to the face image. The camera image/audio processor 218 can also load audio data from a microphone integral with or separate from the camera 144, and analyze the audio data. For example, the camera image/audio processor 218 can generate a table that associates a program name with a scene when the voice (sound of laughter) of the viewer increases.

The controller 200 has a used device manager 219. The used device manager 219 has a used device registration application, and can start the used device registration application, for example, by the remote controller 174. At the start of the used device registration application, operations by the portable terminal 171 or 174 can be accepted, and the hard disk driver 142 or the disk recorder/reproducer 143 to be connected can be automatically registered as a peripheral device. Each of the portable terminals 171 and 174 has identification (ID) information, so that the IDs are registered as the peripheral devices.

The data collecting/correction value generator 211 operates together with the communication controller 202, and has the function of detecting portable terminals located in a communication area. When detecting a portable terminal, the data collecting/correction value generator 211 can request the communication data remaining in the memory of the portable terminal. The communication data is, for example, blog data, email data, or search data. Trace (history) data regarding the operation of various kinds of content remains in the memory of the portable terminal. Such history data also includes content identification data. The data collecting/correction value generator 211 also collects this history data as communication data.

The controller 200 also includes an interest level request manager 231, a tag information manager 241, and an input range manager 251.

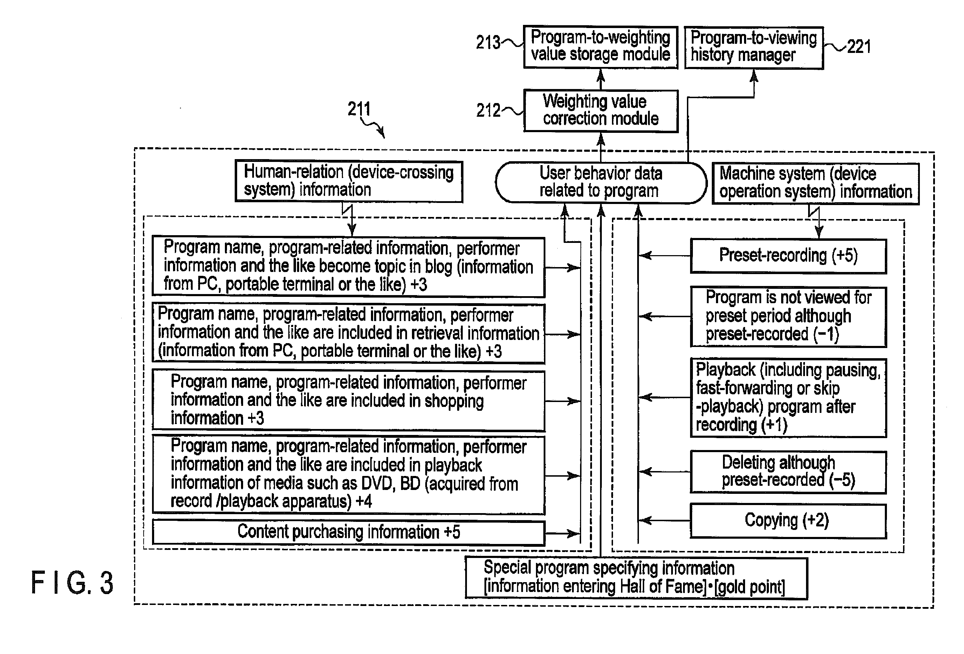

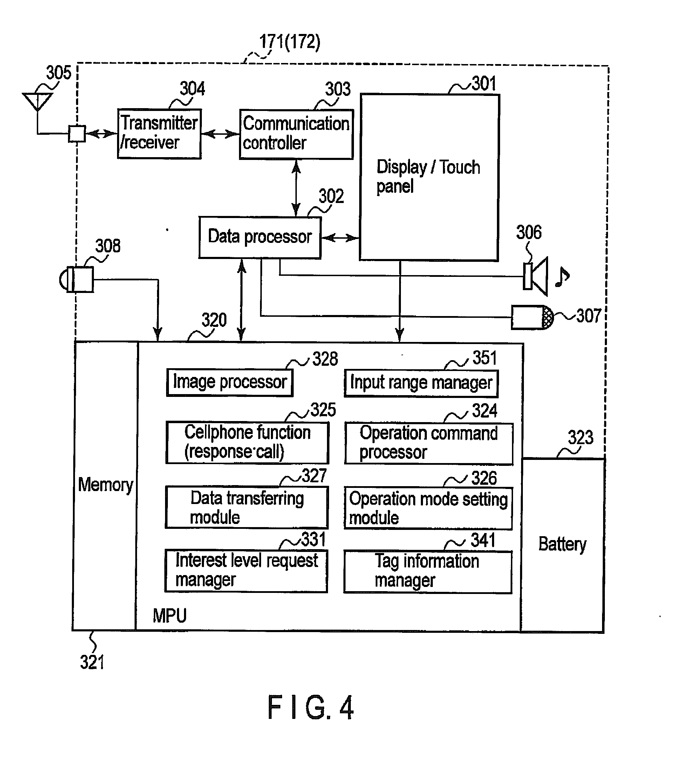

Independently of or together with "program weighting" described below with reference to FIG. 3, the interest level request manager 231 acquires an interest level of the user for the search target from which the input range manager 251 has acquired the input range input by the user through the portable terminal 171 (172) (the input range specified by an input range manager 351 of the portable terminal 171 described with reference to FIG. 4). As needed, the weighting value held by the program-weighting value storage module 213 can be corrected via the data collecting/correction value generator 211 and the weighting value correcting module 212.

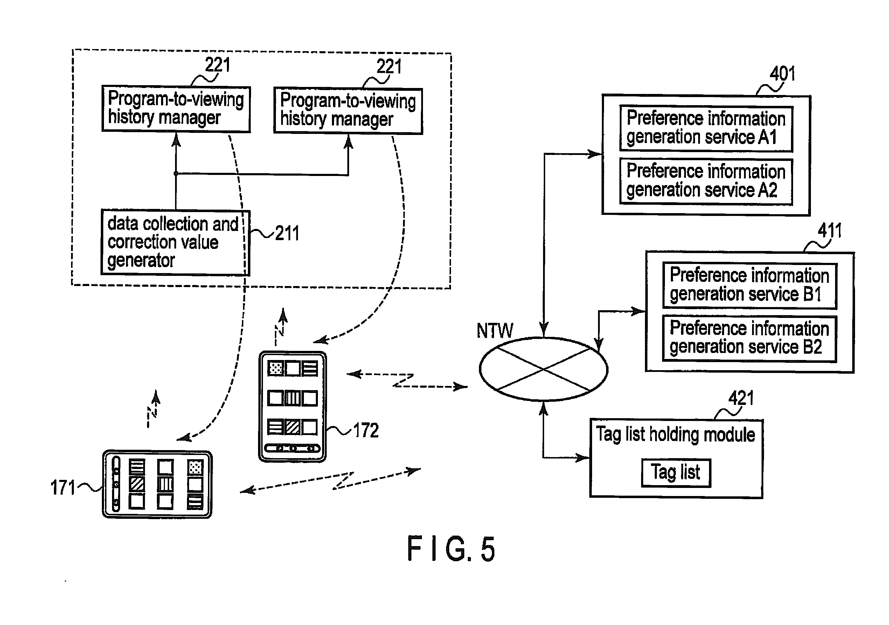

When the user sets a "tag" for the search target acquired by the input range manager 251 (or when an already set tag is referred to or updated), the tag information manager 241 updates (or newly sets) the tag list held by a tag list holding module 421 shown by way of example in FIG. 5.

The input range manager 251 is used, for example, to detect information provided in the specific range input by the user through the portable terminal 171 (172) for a specific range in an image, for example, a search target specified by the user including a person such as an actress, an actor, or a singer, a scene, a building, a vehicle, or an animal that can be specified by a proper noun. The input range manager 251 is also used to extract feature information (see FIG.

8) to search for information held in, for example, external servers 401 and 411 connected to the network NTW and the tag list holding module 421 shown by way of example in FIG. 5. The input range manager 251 is also or otherwise used for a keyword regarding the feature information (the improvement in the reliability of the feature information that uses the EPG data).

One characteristic configuration of the apparatus described above is shown in FIG. 3. The data collecting/ correction value generator 211 collects data on the user behavior for a program, and generates a correction value for the weighting value of the program. The user behavior can be classified into a mechanical system (which may otherwise be referred to as a mechanical operation system) and a human relationship system (which may otherwise be referred to as a device traversing system or a social system). The human relationship system is also equivalent to the communication established by the user (portable terminal) contacting (communicating with) social media.

The mechanical system includes the following behaviors: a program is timer-recorded; a program is timer-recorded but is not viewed (reproduced) within a given period (for example, one week); a program is recorded and then reproduced (including pausing, fast-forwarding, and skip-reproduction); a program is deleted; and a program is dubbed. Such a behavior can be determined by identifying a command signal (instruction) input to the operation command reflecting module 204.

The data collecting/correction value generator 211 determines the command signal, and generates, for example, the following correction values (points):

a program is timer-recorded          +5,
a program is timer-recorded but is not viewed (reproduced) within a given period (for example, one week)          -1,
a program is recorded and then reproduced (including pausing, fast-forwarding, skip-reproduction, and deletion after reproduction)          +1,
a program is dubbed          +2.

These points, that is, the correction values correct the weighting value of the program in the weighting value correcting module 212. The corrected weighting value is stored in the program-weighting value storage module 213. It should be appreciated that the values of these points are not limited to the values shown here and are illustrative only. The user behavior may be classified into more details so that positive points or negative points are generated. If these points are statistically collected, the viewer's preference for the program is known in detail. Viewing history information for programs is collected, and stored in a program-viewing history manager 221. The viewing history is saved, for example, for one month or two, and erased in the order of time. When a viewer (user) recognizing function is provided, the viewing history may be classified by the user.

Furthermore, communication data is also analyzed in the human relationship system, and a correction value for the weighting value is generated. For example, the following points (correction values) are generated:

a program name, program-related information, or performer information is talked about on the blog          +3,
a program name, program-related information, or performer information is included in search information          +3,
a program name, program-related information, or performer information is included in search information for in shopping information (in shopping information)          +3,
a program name, program-related information, or performer information is included in search information in information on the reproduction of a medium such as a DVD or BD          +3, etc., for example.

Moreover, content purchase by video on demand (VOD) is known as an example of content purchase. The purchase of content such as a CD, a DVD, goods, or a game is also known. In order to collect the history of such purchases, Internet access information (information regarding URLs), for example, in the portable terminal (including a personal computer) is analyzed. As a result of this analysis, information on various orders and on-line shopping providers (for example, Amazon (registered trademark) are detected. Such purchase information is effective in detecting content in which the user is particularly interested.

Therefore, when the purchase information (purchase action) is detected, highest points (for example, +5) are produced.

Furthermore, the above-mentioned program-weighting value table may be classified by identification (ID) information for the portable terminals. This classification enables precise generation of preference information for individuals using their own portable terminals.

In addition, a database of the face image data for performers or actors and their names, or a database of cars and company names may also be available. For example, when the face image data for performers or actors is input to the data collecting/correction value generator 211 from an external portable terminal, whether the input face image data is registered on the database is judged. When the input face image data is registered on the database, the user is judged to be highly interested in the programs in which the relevant performer or actor appears, and the weighting value of this program may be added. In this case, a program-weighting value table classified by the portable terminals 171 and 172 is also created. Alternatively, a program-weighting value table classified by user or by portable terminal may be created. The pieces of preference information created by such classifications correspond to the users and the portable terminals.

As described above, the information in the mechanical system and the human relationship system is used as a method of filtering in the embodiment.

In general, about 20 percent of people say that they watch a program because they like the program. So-called fans of a program account for about 20 percent of the people watching this program. Filtering by the above-mentioned mechanical system is suited to the estimation of the preference of this kind of viewer.

On the other hand, about 80 percent of the people often leave the television receivers on without purpose. For example, the television receiver is often casually turned on and a program is displayed during housework, during work, or during a family get-together. It cannot be said that filtering by the mechanical system is best suited to the estimation of the preference of this type of person.

Thus, the embodiment focuses attention on the fact that users make diverse behaviors. That is, the real preference of a user cannot be estimated solely by the behavior of the user toward a given device (for example, a television set in a house). In other words, the user does not make this behavior toward the given device alone.

A user may contact a social media and perform communications to talk about a program name or the name of a performer.

Thus, in the embodiment, the communication data is loaded, and key data is extracted from the communication data. Data (a program name, the name of a performer on the program, face image data for the performer, program-related information) is detected from the key data. The program-related information is, for example, the name of a broadcast station, a channel number, and broadcast times. When data regarding a program is detected, it can be estimated that the user is actively interested in this program. As a result, the user's preference is emphasized by the communication data. This leads to the relative inhibition of the preference (preference that tends to be emphasized by the mechanical system) resulting from the behavior of the user watching a broadcast program without purpose.

In the example described above, data in the mechanical system (mechanical operation system) and data in the human relationship system (device traversing system or social system) are treated in parallel. However, this is not an exclusive data processing method. It is possible to add processing that increases the weighting value when a program handled in the mechanical system is found in the programs detected by the human relationship system.

There are a variety of data classification methods, and the above-mentioned classification methods are not exclusive classification methods. For example, data may be classified by overall data, history data, and preference data. The "overall data" is, for example, the whole information on the Internet, and is data acquired from program information, blogs, twitters, and Internet news. The "history data" is data generated by the behavior of the user, and is data generated by the program reproduced, by the program recorded, or by the program with which a purchased media is associated. Here, the preference data is used to obtain preference information by providing a weighting value to the program corresponding to the key data in the "history data". In this case as well, human relationship information is used.

The device shown in the embodiment is not limited to the embodiment described above. The camera image/audio processor 218 can identify a loaded face image of a viewer, and create a table that associates the face image with the information regarding the program viewed by the viewer corresponding to the face image. It is also possible to load audio data from the microphone integral with or separate from the camera 144, and analyze the audio data. Therefore, preference information for each viewer can be created.

However, when more than one viewers are detected, common preference information can be created. Moreover, the voice of the viewer may be recognized, and when the viewer is laughing loudly, an additional point for the program being viewed may be generated.

The weighting value may be exceptionally high and exceed a given threshold. This kind of program can be treated as a special program (or a "privileged program"). For the "privileged program" having a weighting value exceeding the given threshold, program information is registered on a special program registration module 223. When a corresponding program signal is recorded, for example, in the hard disk driver 142, an erasing prohibition flag is added.

The name, etc. of the "privileged program" can be displayed on the display 130 by the operation of the portable terminal. The name, etc. of the "privileged program" can be read by a request signal from the portable terminal and displayed on the display of the portable terminal.

The program information for the "privileged program" can also be registered by an operation signal from the portable terminal. The user may wish to set, as the "privileged program", a program in which this user appears, or a program in which the user is particularly interested. The user can operate the portable terminal so that a program guide including the name of this program will be displayed, for example, on the display 130 or on the display of the portable terminal. The user can then operate a special program registration operation button to register, as the "privileged program", a program in which the user appears, or a program in which the user is particularly interested.

Information to be privileged (a "privileged program") is not exclusively the name of a program, and can be, for example, and a person's name, a performer's name, or a product name.

The data collecting/correction value generator 211 can generate a correction value for a weighting value in accordance with collected data. However, the acceptance of the collected data may be rejected, and no correction value for a weighting value may be generated. In order to take this action, key data (keyword) to be rejected is registered from the portable terminal in advance. The key data to be rejected is, for example, data offensive to public order and morals, and is stored in the data collecting/correction value generator 211.

FIG. 4 shows an example of the internal configuration of the portable terminal 171. A display 301 operates as a video display, and can operate as a touchscreen. When a menu screen is displayed, the user touches a desired item, and this operation input is then recognized by an operation command processor 324 of an MPU 320. For example, if the touch operation is an operation input for selecting a telephone function, an operation mode setting module 326 sets the portable terminal 171 to a mobile telephone mode.

An operation screen for dial input is displayed on the display 301. If the operation for dial input toward a desired destination is performed, a mobile telephone function module 325 sends a signal to call a communication partner via a data processor 302, a communication controller 303, and a transmitter/receiver 304. When the user is connected the communication end online, a signal from the communication partner is decoded via the transmitter/receiver 304, the communication controller 303, and the data processor 302. Voice data is then output from a speaker 306. Voice data from the sending end is processed by the data processor 302 via a microphone 307, and sent to the communication controller 303. This voice data is then transmitted to the communication partner via the transmitter/receiver 304 as transmission data. A memory 321 is used to temporarily save data, or to store applications. A reference number 323 denotes a battery which can be charged with electricity.

The portable terminal 171 can download, for example, content or an application via the Internet. The portable terminal 171 can also transfer the downloaded content or application to, for example, the television receiver shown in FIG. 1 under the control of a data transfer module 327. In this case, the portable terminal 171 seemingly functions as a repeater. The portable terminal 171 can also request the television receiver to reproduce a program. The amount of data for the reproduced program sent from the television receiver is relatively large for the portable terminal 171, the portable terminal 171 does not save the reproduced program and functions as a monitor.

The portable terminal 171 can request the television receiver to provide program guide image data, content reproduction data, and control screen data for controlling the television receiver. The control screen data includes, for example, data for the menu screen, an image quality (for example, resolution and luminance) screen, a color adjustment screen, and a sound quality adjustment screen. When a control screen is acquired, the user can provide inputs for various adjustments of the television receiver via the touchscreen of the portable terminal. Adjustment data for the levels of these adjustments can be saved in the memory 321, and can be used for the next adjustments. For example, adjustment data can also be provided to other television receivers that are registered for use.

The portable terminal 171 can download content from the external server or the television receiver, and display the content on the display 301. When the content (moving images, pictures, characters, or figures) is displayed on the display 301, the finger of the user touches the face (or name) of the desired performer on the screen, and the face image data is then processed to be included in the previously described communication data. The finger of the user may encircle the face (or name) of the performer on the screen. The target image is not exclusively the face (or name) of the performer and may be a user's favorite car, a building, an interesting character string, or a figure. This operation input is processed by the operation command processor 324.

The portable terminal 171 (172) also comprises an interest level request manager 331, a tag information manager 341, and an input range manager 351.

Independently of or together with the "program weighting" described with reference to FIG. 3, the interest level request manager 331 acquires an interest level of the user, for example, for the search target from which the input range manager 351 has specified the input range input by the user through the portable terminal 171. As needed, the weighting value held by the program-weighting value storage module 213 can be corrected via the data collecting/correction value generator 211 and the weighting value correcting module 212.

For example, when the user sets a "tag" for the search target (particular object) specified by the input range manager 351 in accordance with the operation of the portable terminal 171 (172) by the user (or when an already set tag is referred to or updated), the tag information manager 341 updates (or newly sets) the tag list held by the tag list holding module 421 shown by way of example in FIG. 5.

When, for example, the user uses the portable terminal 171 (172) to input a signal intended for range input with regard to a specific range in an image, the input range manager 351 is used to set (detect) the range input to specify information provided in the input specific range, for example, a particular object specified by the user, that is, a person such as the (above-mentioned) actress, actor, or singer, or a scene, a building, a vehicle, or an animal that can be specified by a proper noun.

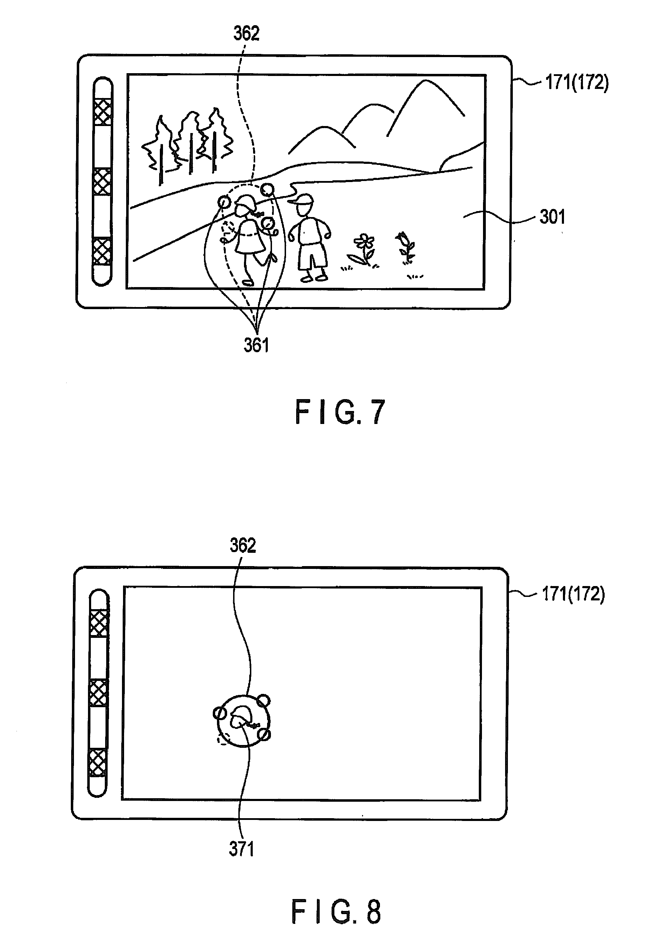

The input range specified (set) by the input range manager 351 is processed by the operation command processor 324 in accordance with "specific range" setting processing described with reference to FIG. 6 to FIG. 8, and is used to extract the specific range or feature information (see FIG. 8) included in the specific range and/or to search for a keyword regarding the feature information (the feature information that uses the EPG data, or a "telop (character data)") via the servers 401 and 411 or the tag list holding module 421.

The portable terminal 171 has a function to perform a near field wireless communication with the television receiver shown in FIG. 1. That is, when the data collecting/correction value generator 211 of the television receiver detects the portable terminal 171 and requests the communication data remaining in the memory, the portable terminal 171 activates a data transferring module 227 and sends the communication data. The portable terminal 171 then deletes the sent communication data.

Various methods can be used to send the communication data to the data collecting/correction value generator 211 of the television receiver from the portable terminal 171. For example, the communication data can be sent to the television receiver from the portable terminal 171 when the user operates an operation button of the portable terminal 171. The communication data may be automatically sent to the television receiver when the television receiver is operated by the portable terminal 171.

As described above, in the embodiment according to the present disclosure, the history data based on the operation of the portable terminal and the history data based on the operation of the television receiver are present as the history data to be collected.

Thus, in the embodiment, the history data for various devices in the house can be individually or collectively sent to a management server. Data can be sent to the management server by the portable terminal or by a television receiver 101. In this case, for example, data in the program-viewing history manager 221 is conveniently used because the human relationship information and mechanical system information are collected in the data in the program-viewing history manager 221. However, the weighting value is omitted here.

On the other hand, the management server can use a characteristic detection program, a characteristic analyzing program, and a preference information generation program to provide proper recommended data to each household as service. The characteristic detection program uses viewing history data, for example, to allocate unique weighting to a program. For example, a method of weighting each item shown in FIG. 3 may be used, or other weighting values may be set.

The characteristic analyzing program then uses the weighting value for the program and the history data to add a unique priority order and an exception order to each program. The preference information generation program refers to data on the priority order and the exception order to also add priority orders or exception orders to selected programs, and creates recommended information, that is, preference information. The management server returns the created recommended information to the portable terminal or the television receiver.

Particularly in the embodiment, as described above, a portable terminal such as a smartphone or a tablet is mainly used for auxiliary operation or expansive operation in content.viewing by a television receiver having a large screen. An operation history generated by the use of the portable terminal is collected as history data. Thus, the data collecting/correction value generator 211 exhaustively collects the viewing histories of video content in the household in accordance with the various operations of the devices.

In this case as well, when more than one portable terminal are used, the viewing history for each portable terminal may be independently collected. When the viewing history for each portable terminal is independently collected, preference information for each user having each portable terminal can be generated.

FIG. 5 shows an example of how the program-viewing history managers 221, 221 for the portable terminals 171 and 172 are provided. That is, FIG. 5 shows an example of a diagram of a configuration that can consign the creation of the preference information (recommended information) for each portable terminal to the external server.

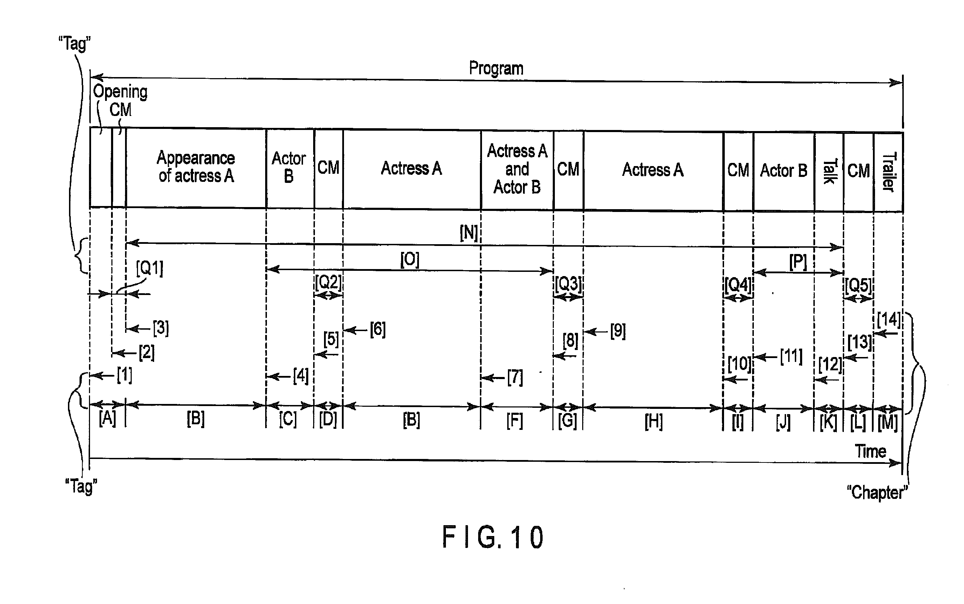

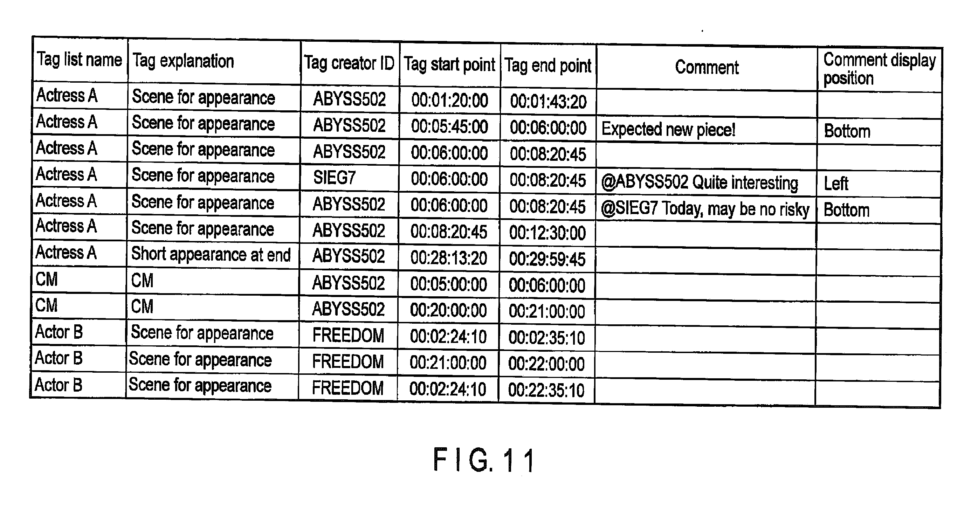

In FIG. 5, the portable terminals 171 and 172 can request the viewing history data in the program-viewing history managers 221, 221 to use the viewing history data. The portable terminals 171 and 172 can send their own viewing history data to the desired servers 401 and 411 and/or preference information creation services A1, A2, B1, and B2 in the server, or to the tag list holding module 421 shown by way of example in FIG. 5. The servers 401 and 411 and/or preference information creation services A1, A2, B1, and B2 in the server use the received viewing history data to create preference information, and return the preference information to the portable terminal 171 or 172. The tag list holding module 421 holds a "tag" shown by way of example in FIG. 10 or a "tag list" shown by way of example in FIG. 11.

Therefore, each of the portable terminals 171 and 172 can acquire a particular scene which corresponds to the viewing history data and which conforms to the preference information or the feature information searched for by the user (one given scene in moving images, or (one or more) scenes which correspond to the feature information and in which, for example, actress A appears). The portable terminal 171 or 172 can also acquire the preference information from the desired preference information creation service A1, A2, B1, or B2. If the user of the portable terminal is not satisfied with the preference information acquired, for example, from preference information creation service A1, the user can acquire the preference information from the other preference information creation service A2 or B1 or B2. This preference information may be saved in the portable terminal, or may be saved in the television receiver for each portable terminal.

FIG. 6 to FIG. 8 illustrate how the weighting value is changed by the interest level request manager 331, and how to set (detect) the "specific range" used to acquire the interest level of the user regarding a particular search target indicated by the user and correct the weighting value held in the program-weighting value storage module 213 as needed.

When an image shown in FIG. 6 for the portable terminal (171/172) synchronous with the image (including a still image) displayed by the display 130 of the television receiver 101 (see FIG. 1) is being displayed, the user turns on a mode button 311 of the portable terminal 171 (172). Accordingly, menu button (bar) indicators 313, ..., 317 that enable the input of an instruction to execute a given operation (application or program) are displayed on the touchscreen 301 by on-screen display (OSD) processing to have a predetermined transmissivity (a base image is transmitted at a given rate) relative to a currently displayed image.

If the user touches, for example, the menu button 313 with the finger, later-described "digest reproduction" is started so that the user viewing the image, for example, by the portable terminal extracts and reproduces the scene of a particular object.

The image displayed by the display 130 of the television receiver 101 and the image displayed by the portable terminal (171/172) are synchronized with each other in the example shown in FIG. 6, but do not necessarily have to be synchronized with each other. For example, the later-described "digest reproduction" is selected so that the user viewing the image by the portable terminal extracts and reproduces the scene of a particular object, and the user inputs a start instruction. In this case, the television receiver 101 is activated, for example, by a Wake on LAN (WoL) function, and the same program as the program indicated by the portable terminal can be acquired (received), and images can be then displayed.

When the user selects (indicates and inputs) the "digest reproduction" in FIG. 6, the user touches the display screen (image) on the portable terminal with two or more fingers, and then finger position information 361 specified by the touchscreen 301 as a result of the finger touching is obtained as shown in FIG. 7 (when the image is a moving image, the "digest reproduction" is indicated and input, and a still image mode (for example, pause) is set before the input (of the position information) by the fingers). Here, it is preferable that the still image mode (for example, pause) is automatically set in association with the start of the mode (application) for specifying an input range. When there are two pieces of finger position information 361 (the user indicates a particular position on the display screen with two fingers), two points are specified from coordinates in the whole range of the touchscreen 301, and a segment that connects the two points is found. For information specified by the segment (for example, an image with which the segment intersects), a search target (particular object) is specified (set) by the input range manager 351 and the operation command processor 324.

When there are three (or four) pieces of finger position information 361 (the user indicates a particular position on the display screen with three (or four) fingers) in FIG. 7, at least three points are specified from the coordinates in the whole range of the touchscreen 301, and a circle that contacts the three points (indicated by [362] in FIG. 7) or an inscribed circle of a triangle defined by the three points is found. For information on the image mostly included in the circle, a search target is specified (set) by the input range manager 351 and the operation command processor 324. It should be understood that the image mostly included in the triangle defined by the three points can also be the search target.

When there are four or more pieces of finger position information 361 (the user indicates a particular position on the display screen with four or more fingers) in FIG. 7, at least four (or five) points are specified from the coordinates in the whole range of the touchscreen 301. For information on the image mostly included in a circle that contacts the four points or an inscribed circle of a triangle defined by any three of the four points, a search target is specified (set) by the input range manager 351 and the operation command processor 324. It should be understood that the image mostly included in the rectangle defined by the four points can also be the search target. Alternatively, the image on which the intersection of two straight lines each connecting two points of the four points overlaps can also be the search target.

When five points are indicated, a search target can specify (set) one of the image mostly included in the pentagon that connects the points, the image mostly included in an inscribed circle of the pentagon, or the image mostly included in the pentagon defined by the (five) segments that connect the points except for the adjacent points.

When three or more points are specified, a circle or an inscribed circle used to specify an input range does not have to be a precise circle, and has only to be approximate to a circle, an ellipse, or a rectangle (or a polygon). The input range can be specified by range information that instructs the user to, for example, encircle (or check) a display image displayed by the touchscreen 301 of the portable terminal 171 (172) within a given time.

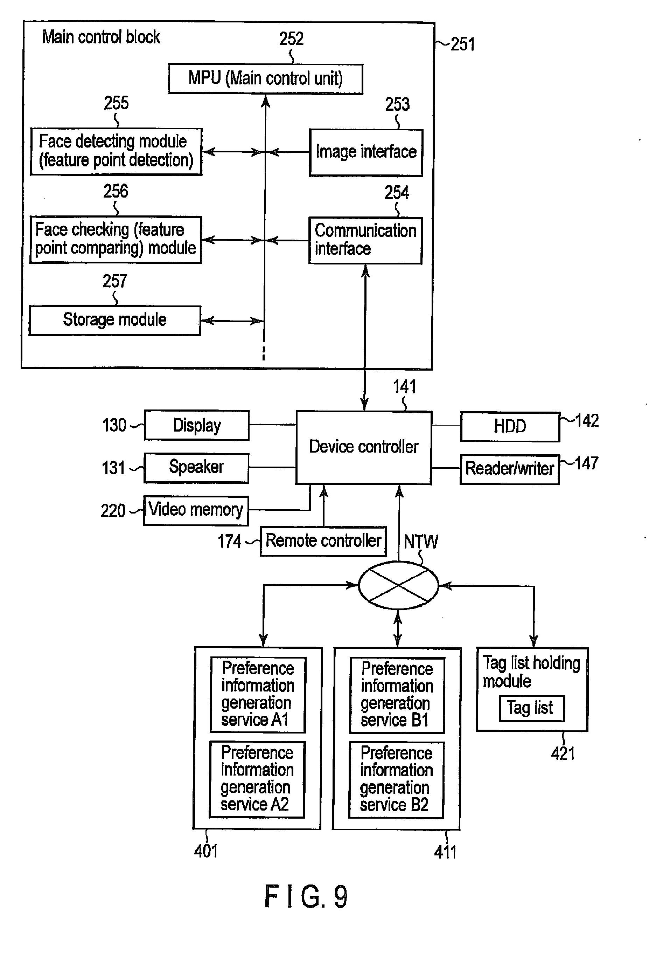

For the input range set (specified) by the method described with reference to FIG. 7, as described above, the feature information, that is, a particular object (see FIG. 8) 371 specified to overlap the segment that is in or that intersects with the circle or rectangle or pentagon (polygon) is specified (extracted) as, for example, actress A in a feature information extracting module (which is preferably prepared as, for example, firmware of the input range manager 251) shown by way of example in FIG. 9. The feature information extracting module may be prepared on the side of the television receiver 101 as shown in FIG. 2, or may be prepared on the side of the portable terminal as shown in FIG. 4. It is also possible to prepare a feature point detecting (face detecting) module alone, for example, on the side of the portable terminal, and prepare, for example, the extraction and/or feature point comparison (face check) and the communication with the database on the side of the television receiver 101 or on the side of server 401 or 411.

It should be understood that the feature information extracting module, that is, the "digest reproduction" mode is started in response to an instruction input by the user on the menu button display shown in FIG. 6, but may be configured to be automatically started when the touchscreen 301 is detected to be touched, for example, by three fingers (for a given time).

In the "digest reproduction" mode which is started by FIG. 7 and FIG. 8 (or which may follow a start input in accordance with FIG. 6), more specifically, for a particular object (search target) extracted in accordance with the specification of an input range (particular object) described below, the image (image information) or feature information is supplied to the servers 401 and 411 or the tag list holding module 421 via the network NTW through the television receiver 101 or via the network NTW by direct access from the portable terminal. For the communication between the television receiver 101 and the portable terminal, the above-mentioned near field wireless communication or a communication that uses a (commercial) network may be used.

For the received feature information (particular object), server 401 or 411 or the tag list holding module 421 supplies, for example, a program name, a channel (ch) name, and "tag list" and/or "tag" information to the television receiver 101 and/or the portable terminal 171 (172) through the network NTW regarding a program having a "tag list" or "tag" information that includes the feature information.

In the portable terminal which has received the "tag list" and/or the "tag" information, a user interface (UI) indicating, for example, [start "digest reproduction" from the present position] or [start "digest reproduction" from the beginning] is OSD-displayed over the currently displayed image to prompt the user to start the "digest reproduction". The supplied "tag list" or the "tag" information is managed by the tag information manager 341 (241) for each time from the start time to the end time of the program that includes the currently displayed image. The "tag list" or the "tag" information is also reflected in the history information referred to by the interest level request manager 331 (231).

That is, in the method of controlling the portable terminal (electronic device) having the touchscreen 301, for example, the specification of the position range of the particular object (search target) based on the touch operation by the finger of the user is detected from the moving image (picture) displayed on the touchscreen 301. Information on the detected particular object is output to server 401 or 411 or the tag list holding module 421 through the network NTW. A search result (tag list) including the tag information searched for in the server is received. On the basis of the received tag information (tag list), the "digest reproduction" in which the segments of the moving images displaying the particular object are specified can be performed.

The feature information extracting module shown in FIG. 9 comprises at least a main processing unit 252 (352), an image interface 253 (353), a communication interface 254 (354), a face detecting (feature point detecting) module 255 (355), a face checking (feature point comparing) module 256 (356), and a storage (357). When the storage module 257 (357) has, for example, the feature information (search target) that has been searched for in the past, the storage module 257 (357) can hold information that uses the above-mentioned EPG data regarding a scene, a building, a vehicle, or an animal that can be specified by a proper noun used in the search, for example, actress A, actor B, Mt. Fuji (mountain), or the Nozomi super express (Shinkansen train in Japan). The storage module 257 (357) stores the input ranges that have been input, that is, the number of times the search targets (particular objects) have been input, and can also be used as the history information referred to by the interest level request manager 231 (331).

The main processing unit 252 (352) comprises, for example, an MPU having a program memory and a work memory, and the MPU executes a program (firmware) stored in the program memory to enable various functions.

The image interface 253 (353) includes, for example, a near field wireless communication function (for example, Bluetooth (registered trademark)), and sends, to server 401 or 411 or the tag list holding module 421 or to the television receiver 101, for example, through the network NTW, an extraction result of the search target (particular object) included in the input range specified by the touchscreen 301. In this case, the extraction result (search target) sent by the feature information extracting module (input range manager) may be information (image data) including face information or may be feature information in which the features of a face or the search target are extracted. The search target (extraction result), that is, the image data or the feature information is sent by the image interface 253 (353), and held, for example, in the tag information manager 341 (241).

Server 401 or 411 or the tag list holding module 421 or the television receiver 101 then presents a similar image having similar feature information regarding the images having corresponding feature information (or having a similarity level/similarity equal to or more than a predetermined level) at the request of the portable terminal 171 (feature module) so that the main processing unit 252 (352) and the feature point comparing (face checking) module 256 (356) can compare the extraction results.

Regarding the feature information, a two-dimensional region (FA) of the search target image is determined by using, for example, a two-dimensional coordinate value originating from the upper left corner of a rectangular region including the feature information. In the two-dimensional region FA, a template (one or more prepared standard patterns) is moved by the feature point detecting (face detecting) module 255 to find the value of the correlation between the pattern on the region FA and the prepared standard patterns.

In this way, the value of the correlation between the standard pattern and the feature information (feature point) of the pattern at a particular position (x, y) represented by the two-dimensional coordinates is coded. When the coded correlation value or the feature information corresponds to the feature information held in, for example, the program-weighting value storage module 213 of server 401 or 411 or the tag list holding module 421 or the television receiver 101, the coded correlation value or the feature information is used to search for the feature information and/or the keyword (feature information improved in reliability that uses the EPG data) associated with the feature information. When the coded correlation value or the feature information corresponds to the feature information, the coded correlation value or the feature information is returned (supplied for the execution of the "digest reproduction" mode) to the television receiver 101 or the portable terminal 171 (172) from server 401 or 411 or the tag list holding module 421 through the network NTW.

The feature information can be found if a correlation Ms(x,y) in a local region is, for example,

$$Ms(x,y) = \sum f(x+i, y+i) \bullet gs(i,j) / \{\sum f(x+i, y+i) \bullet \sum gs(i,j)\} \quad \ldots \quad (1)$$

wherein gs(i,j) corresponds to prepared standard face patterns different in size, and Ms(x,y) is the correlation between the standard patterns gs(i,j) and the local region (one point on the edge, or the region of a corner or a luminescent spot) in an image f(x,y) of the two-dimensional region FA. For example, under the condition in which the standard patterns gs (i,j) vary in size (differ in size), standard patterns can be created by averaging standard patterns previously collected by a determined size.

Various methods that have already been in practical use can be applied to find the above-mentioned correlation Ms. For example, it is possible to extract and compare (check) feature information in accordance with the method described in "a certification medium issuing apparatus and a person checking apparatus" disclosed in Jpn. Pat. Appln. KOKAI Publication No. 2003-108935.

By using the keyword (feature information improved in reliability that uses the EPG data), "likelihood" can be enhanced when it is difficult to specify from one piece of image information held in the portable terminal 171, for example, when a person resembles actress A but cannot be easily distinguished from an actress C or an actress D (or the person highly resembles actress A but the picture is presumed to show the childhood of this person).

The feature information extracting module shown in FIG. 9 does not necessarily have to be prepared in the television receiver shown in FIG. 1 or the portable terminal shown in FIG. 4 in the form of hardware. For example, if the feature information extracting module can be downloaded from an application supply source (external server) which is connected to the network NTW and which is mainly intended for downloading by users, the feature information extracting module can be always provided by any timing of the user's requirement. In this case, when the application (or an algorithm for extracting feature information) is changed or upgraded, the application is available in a preferable condition by prompting access to the user (re-downloading (upgrading)) or by automatically distributing the application (from the server) in accordance with the user's history of use.

When an image including the particular object (search target) specified by the above-mentioned feature information extracting module is a moving image, it is preferable that the period (time zone) in which the target appears can be referred to by the portable terminal as a "tag" that indicates a "segment from the appearance to the end".

The concept of the "tag" and the "tag list" that permits the viewing of the "tags" are described with reference to FIG. 10 and FIG. 11. The "tag list" is preferably held in the tag list holding module 421 connected to the network NTW.

As shown in FIG. 10, the "tag" can be set independently of "chapters" indicated, for example, by [1] to [14], and includes a segment managed by a start position (origin) and an end position (end). The segments are permitted to overlap each other. The origin and the end may be shared by one or more "tags". The origin or end of one "tag" may be the end or origin of another "tag". While the chapter includes a given number of points conforming to time information for each program, the "tag" is a segment having the above-mentioned origin and end.

In FIG. 10, the "tag" is a segment which is substantially divided by the chapters, for example, with regard to [B] to [M]. For example, [A] includes "opening" and "initial commercial message (CM)", [N] includes "main content (including interrupting commercial messages)" between "end of initial commercial message" and "origin of last commercial message", [0] includes the period in which actress A appears, and [P] includes the period in which actor B appears. In this way, there are various examples of divisions.

The above-mentioned origin and end of the "tag" are specified as actual times, for example, by time codes (times managed by a timer controller (clock)) prepared in the television receiver 101 so that a program start time is [0 (frame 00 minutes 00 seconds)].

To each "tag", it is possible to attach accompanying information such as "tag explanation"/[ID] indicating the [section] characterized by the image or audio (sound) included in the "tag". The [sections] are, for example, [title (program name)], [person (actress A)], [music], [person (actor B)], [commercial message (CM)], [distribution source (channel (ch)) name], and [creator (ID)]. One or more [sections] can be prepared. For example, the [presence]/[display position]/[content] of a [comment] can be freely set. An "end tag" indicating the absence of subsequent "tags" can be set to the end (terminal) of the "tag" attached at the last (closest to the end of the program) position on the time codes. As the [comment], an explanation including a given number of characters, for example, about 250 characters can be recorded.

As the [display positions], it is possible to set given positions in the display screen of the television receiver 101 as shown in FIG. 11, for example, "upper left", "upper right", "lower left", "lower right", "bottom (nearly the center in the horizontal direction)", "top (nearly the center in the horizontal direction)", "center", "vertically right (nearly the center in the vertical direction)", and "vertically left (nearly the center in the vertical direction)".

The "tag" can also be automatically set to be linked with, for example, the extraction of commercial messages. For example, the end (change) of a scene can be used in accordance with a scene detecting function, that is, the feature of an image or sound. For the automatic detection and setting of the "tag", it is possible to use a caption detecting system, that is, the detection of the presence of the "caption" or the switch of the "caption". Moreover, it is possible to use particular section information based on the EPG data, for example, information that actress A is scheduled to appear at about 00:34:56. In addition, the "tag" can be automatically set by dividing a program into given periods (time-to-time), for example, a "1/20" of each, a "1/10" of each or "120 seconds" over the duration of the program. One "tag" can be set in the whole program (title). Further, the start point and/or end point of the "tag" can overlap the break point that defines the chapter, and the segment can partly or entirely overlap the other "tag". There may be two or more overlaps.

As described above, according to the embodiment, it is possible to provide "tag" information for moving image content to enable the analysis of a picture (image) located in a range set by input range specifying operation, for example, by touching a particular object (search target) or by encircling or checking the particular object with the user's finger using a portable terminal (multifunctional tablet terminal or mobile telephone) so that a part in which this picture is displayed can be directly reproduced.

Consequently, it is possible to send a "tag" or search target information from the portable terminal to the server or the television receiver or the recorder/reproducer, search for an associated picture based on the "tag" or search target information, and reproduce a particular part of the picture.

## Claims

1.  An electronic device control method **characterized by** comprising:

    detecting a position range specification of a particular object based on a touch operation from a moving image displayed on a touchscreen;
    outputting information on the detected particular object to a server via a network, and receiving a search result including tag information searched for in the server; and
    determining and reproducing, in accordance with the received tag information, a segment of the moving image in which the particular object is displayed

2.  The electronic device control method of claim 1, **characterized in that** the position range specification of the particular object comprises at least two or more coordinate indications on a display image displayed by the touchscreen, and a position input which changes on the display image.

3.  The electronic device control method of any one of claims 1 or 2, **characterized in that** the position range specification of the particular object comprises the determination of an image located in a region associated with two or more coordinate indications on a display image displayed by the touchscreen.

4.  The electronic device control method of any one of claims 1 to 3, **characterized in that** the particular object comprises information which determines an image displayed by the touchscreen.

5.  An electronic device **characterized by** comprising:

    an input module (171(172)) configured to receive an input of position information for a display image;
    a position determining module (252) configured to determine an image corresponding to the position information received by the input module;
    a feature information manager (251) configured to generate feature information indicating a segment from the emergence to the end of an image determined by the position determining module; and

a controller (320) configured to acquire, from an external device, feature information including an image corresponding to the image included in the feature information generated by the feature information manager, and configured to extract and reproduce the image included in the generated feature information.

6. The electronic device of claim 5, **characterized in that** the input module integrally comprises an image display, and receives at least two or more coordinate indications for the image displayed by the image display, and a position input changing on the display image.

7. The electronic device of claim 6, **characterized in that** the input module integrally comprises an image display, and receives, as a particular object, an image located in a region associated with two or more coordinate indications on the image displayed by the image display.

8. The electronic device of any one of claims 6 or 7, **characterized in that** the feature information manager extracts, from program information, information which determines the particular object displayed by the image display.

9. An electronic device **characterized by** comprising:

a feature information receiving module (171(172)) configured to receive feature information indicating the feature of a particular object corresponding to position range specification information for the particular object provided to a display image; and
a feature information manager (251) configured to send, to a device configured to display the display image, management information for the particular object including the feature information held in the feature information receiving module.

F I G. 1

EP 2 621 180 A2

EP 2 621 180 A2

200

144

| 201<br>EPG data<br>processor | 204<br>Operation instruction<br>reflection module | 214<br>Preference information<br>generator | 218<br>Camera image<br>and audio processor |
|---|---|---|---|
| 202<br>Communication<br>controller | 205<br>Application<br>manager | 213<br>Program-to-weighting<br>value storage module | 219<br>Used device<br>manager |
| 203<br>Display<br>controller | 231<br>Interest level request<br>manager | 212<br>Weighting value<br>correction module | 221<br>Program-to-viewing<br>history manager |
| 251<br>Input range<br>manager | 241<br>Tag information<br>manager | 211<br>Data collection and<br>correction value generator<br>[machine system]•[human system] | 223<br>Special program<br>registration module |

NTW

161
Transmitter
/receiver

163

162
Transmitter
/receiver

Memory

165

Remote
control
receiver

164

171

172

F I G. 2

EP 2 621 180 A2

213~ Program-to-weighting value storage module   Program-to-viewing history manager ~221

211                212~ Weighting value correction module

| Human-relation (device-crossing system) information | User behavior data related to program | Machine system (device operation system) information |

Program name, program-related information, performer information and the like become topic in blog (information from PC, portable terminal or the like) +3

Program name, program-related information, performer information and the like are included in retrieval information (information from PC, portable terminal or the like) +3

Program name, program-related information, performer information and the like are included in shopping information +3

Program name, program-related information, performer information and the like are included in playback information of media such as DVD, BD (acquired from record /playback apparatus) +4

Content purchasing information +5

Preset-recording (+5)

Program is not viewed for preset period although preset-recorded (−1)

Playback (including pausing, fast-forwarding or skip -playback) program after recording (+1)

Deleting although preset-recorded (−5)

Copying (+2)

Special program specifying information [information entering Hall of Fame]・[gold point]

FIG. 3

171(172)

305

304
Transmitter /receiver

303
Communication controller

301
Display / Touch panel

302
Data processor

306

308

307

320

**Image processor** ~328

**Input range manager** ~351

**Cellphone function (response·call)** ~325

**Operation command processor** ~324

Memory

**Data transferring module** ~327

**Operation mode setting module** ~326

323

Battery

**Interest level request manager** ~331

**Tag information manager** ~341

MPU

321

F I G. 4

221
Program-to-viewing history manager

221
Program-to-viewing history manager

data collection and correction value generator 211

172

171

NTW

401
Preference information generation service A1

Preference information generation service A2

411
Preference information generation service B1

Preference information generation service B2

421
Tag list holding module

Tag list

F I G. 5

EP 2 621 180 A2

19

F I G. 6

362

171(172)

301

361

# FIG. 7

362

171(172)

371

# FIG. 8

## Main control block

MPU (Main control unit) 252

~251

255
Face detecting module (feature point detection)

253
Image interface

256
Face checking (feature point comparing) module

254
Communication interface

257
Storage module

141
Device controller

130 ~ Display

131 ~ Speaker

220 ~ Video memory

142 ~ HDD

147 ~ Reader/writer

174 ~ Remote controller

NTW

Preference information generation service A1

Preference information generation service A2

401

Preference information generation service B1

Preference information generation service B2

411

Tag list holding module

Tag list

421

## FIG. 9

F I G. 10

| Tag list name | Tag explanation | Tag creator ID | Tag start point | Tag end point | Comment | Comment display position |
|---|---|---|---|---|---|---|
| Actress A | Scene for appearance | ABYSS502 | 00:01:20:00 | 00:01:43:20 | | |
| Actress A | Scene for appearance | ABYSS502 | 00:05:45:00 | 00:06:00:00 | Expected new piece! | Bottom |
| Actress A | Scene for appearance | ABYSS502 | 00:06:00:00 | 00:08:20:45 | | |
| Actress A | Scene for appearance | SIEG7 | 00:06:00:00 | 00:08:20:45 | @ABYSS502 Quite interesting | Left |
| Actress A | Scene for appearance | ABYSS502 | 00:06:00:00 | 00:08:20:45 | @SIEG7 Today, may be no risky | Bottom |
| Actress A | Scene for appearance | ABYSS502 | 00:08:20:45 | 00:12:30:00 | | |
| Actress A | Short appearance at end | ABYSS502 | 00:28:13:20 | 00:29:59:45 | | |
| CM | CM | ABYSS502 | 00:05:00:00 | 00:06:00:00 | | |
| CM | CM | ABYSS502 | 00:20:00:00 | 00:21:00:00 | | |
| Actor B | Scene for appearance | FREEDOM | 00:02:24:10 | 00:02:35:10 | | |
| Actor B | Scene for appearance | FREEDOM | 00:21:00:00 | 00:22:00:00 | | |
| Actor B | Scene for appearance | FREEDOM | 00:02:24:10 | 00:22:35:10 | | |

F I G. 1 1

EP 2 621 180 A2